# EUROPEAN PATENT APPLICATION

(11) **EP 4 156 847 A1**
(43) Date of publication of application: **29.03.2023**
(21) Application number: 21809553.7
(22) Date of filing: 27.04.2021
(51) Int. Cl.: H04W 76/19, H04W 24/10, H04L 5/00

(54) **METHOD EXECUTED BY USER EQUIPMENT AND USER EQUIPMENT**

(30) Priority: 18.05.2020 CN 202010422101
(71) Applicant: Sharp Kabushiki Kaisha, Sakai-shi Osaka 590-8522 (JP)
(72) Inventor: LIU, Renmao, Shanghai 201206 (CN); ZHANG, Chongming, Shanghai 201206 (CN)
(74) Representative: Müller-Boré & Partner Patentanwälte PartG mbB
(86) International application number: PCT/CN2021/090193
(87) International publication number: WO 2021/233088

(57) **Abstract**

Provided in the present invention is a method performed by user equipment, and user equipment. The method performed by user equipment is a method in which UE configured with dual connectivity or multi-connectivity reactivates a deactivated SCG during communication with an MCG and the SCG, the method including the following steps: receiving, by the UE, an SCG activation command, and when the UE receives the SCG activation command, performing at least one of the following operations: resuming transmission of an SRB and a DRB on the SCG; initiating a random access procedure on a PSCell of the SCG, or initiating random access on the PSCell; if a timer T310 is running, stopping the timer T310; if a timer T312 is running, stopping the timer T312; resuming or initiating a measurement or a measurement configuration associated with the SCG; releasing a measurement configuration associated with the SCG in a deactivated state; activating an SCell of the SCG; activating the PSCell of the SCG; starting an SCG activation timer; and if an SCG deactivation timer is running, stopping the deactivation timer.

## Description

### TECHNICAL FIELD

The present invention relates to the technical field of wireless communications. More specifically, the present invention relates to a method performed by user equipment, and corresponding user equipment.

### BACKGROUND

With the rapid growth of mobile communications and great progress of technology, the world will move toward a fully interconnected network society where anyone or anything can acquire information and share data anytime and anywhere. To meet the requirements for enhanced mobile broadband services and the communication requirements for massive Internet of Things terminals, in new-generation communication technology (5G), researches are carried out to provide technical enhancements for users in dual connectivity and multi-connectivity (RP-181469: New WID on DC and CA enhancements).

Dual connectivity or multi-connectivity means that UE operating in a connected state establishes a physically established wireless connection with more than one network node, and implements data transmission. A master node (MN) and a secondary node (SN) are included. The MN is executed by one Gnb/Enb/ng-eNB, and a serving cell group controlled by the MN is referred to as a master cell group (MCG). Correspondingly, the SN is executed by one or more Gnbs/Enbs/ng-eNBs, and a serving cell group controlled by the SN is referred to as a secondary cell group (SCG).

UE configured with dual connectivity or multi-connectivity may achieve a high data rate by communicating with the MCG and the SCG. However, in order to maintain communication with the two network nodes, power consumption of the UE is also correspondingly doubled. To reduce the power consumption of the UE, the SCG may be deactivated in appropriate circumstances, such as when communication traffic of the UE is small. A network side may further reactivate a deactivated SCG as required. Hence, how to effectively activate an SCG so as to resume data transmission is a problem that needs to be solved.

### SUMMARY

Provided in the present invention is a solution to the following problem. That is, a solution is provided to address the problem as to how to effectively activate an SCG so as to resume data transmission.

According to an aspect of the present invention, provided is a method performed by user equipment, in which user equipment (UE) configured with dual connectivity or multi-connectivity reactivates a deactivated secondary cell group (SCG) during communication with a master cell group (MCG) and the SCG, the method comprising the following steps:
receiving, by the UE, an SCG activation command, and when the UE receives the SCG activation command, performing at least one of the following operations:
resuming transmission of a signaling radio bearer (SRB) and a data radio bearer (DRB) on the SCG;
initiating a random access procedure on a primary serving cell (PSCell) of the SCG, or initiating random access on the PSCell;
if a timer T310 is running, stopping the timer T310, wherein T310 is started when the UE consecutively receives N out-of-sync indications on the PSCell;
if a timer T312 is running, stopping the timer T312, wherein T312 is configured with a timer measurement ID, and is started when a measurement report thereof is triggered;
resuming or initiating a measurement or a measurement configuration associated with the SCG;
releasing a measurement configuration associated with the SCG in a deactivated state;
activating a secondary serving cell (SCell) of the SCG;
activating the PSCell of the SCG;
starting an SCG activation timer; and
if an SCG deactivation timer is running, stopping the deactivation timer, wherein the deactivation timer is started when the SCG enters the deactivated state or when a deactivation command is received.

In the above method performed by user equipment, preferably,
a serving cell activation operation comprising the activating the SCell of the SCG and the activating the PSCell of the SCG comprises at least the following operation:
activating any active bandwidth part (BWP) associated with the serving cell.
In the above method performed by user equipment, preferably,
when a serving cell is activated,
a sounding reference signal (SRS) is transmitted on the serving cell;
channel state information (CSI) is reported for the serving cell;
if the serving cell is configured with an uplink channel, then transmission is performed on the uplink channel of the serving cell;
if the serving cell is configured with a random access channel, then transmission is performed on the random access channel of the serving cell;
physical downlink control channel (PDCCH) monitoring is performed on the serving cell;
a PDCCH for the serving cell is monitored; or
if the serving cell is configured with a physical uplink control channel (PUCCH), then transmission is performed on the PUCCH of the serving cell.

In the above method performed by user equipment, preferably,
the activating the PSCell of the SCG refers to performing BWP switching for the PSCell, that is, to switch from a currently dormant BWP to an operating or active BWP.

In the above method performed by user equipment, preferably,
the SCG activation command is a radio resource control layer (RRC) reconfiguration message carrying information indicating activation of the SCG;
the SCG activation command is a media access control layer control element (MAC CE) carrying information indicating activation of the SCG; or
the SCG activation command is carried in downlink control information (DCI) carrying information indicating activation of the SCG.

In the above method performed by user equipment, preferably,
the RRC reconfiguration message carries an information element indicating SCG activation information;
the MAC CE is an SCG activation MAC CE carrying an indication indicating that the UE is to activate a currently configured SCG;
the MAC CE is a serving cell activation MAC CE, and when activation of the PSCell of the SCG is indicated in the MAC CE, the UE considers that the SCG activation command has been received;
the DCI is in a DCI format carrying a field, and the field or a value of the field indicates activation of the PSCell of the SCG; or
when the UE receives a PDCCH carrying the DCI format, the UE activates the PSCell and considers that the SCG activation command has been received.

In the above method performed by user equipment, preferably,
when the UE receives the SCG activation command, the UE transmits confirmation information or response information to a network side/base station to indicate that the SCG activation command has been received, comprising:
after the UE receives the RRC reconfiguration message carrying the SCG activation command or indicating SCG activation, generating, by the UE, an RRC reconfiguration complete message, and submitting the same to a lower layer to transmit the same;
when the UE receives the SCG activation MAC CE carrying the SCG activation command or indicating SCG activation, triggering an SCG activation confirmation, and in the presence of the triggered SCG activation confirmation, when the UE acquires an available uplink resource for new transmission, instructing a multiplexing and assembly procedure to generate an SCG activation confirmation MAC CE for transmission; or
when the UE receives the DCI carrying the SCG activation command or indicating SCG activation, transmitting, on a pre-configured PUCCH resource, information representing an acknowledgment.

In the above method performed by user equipment, preferably,
when the UE receives the SCG activation command, a transmission occasion for transmitting the confirmation information or the response information to the network side/base station is:
when the SCG activation command is received; or
when the UE successfully activates the SCG.

In the above method performed by user equipment, preferably,
when the UE receives the SCG activation command, a resume occasion for resuming transmission on the SCG is:
when or after the UE receives the SCG activation command; or
when or after the UE successfully activates the SCG.

According to another aspect of the present invention, user equipment is provided, comprising:
a processor; and
a memory storing instructions,
wherein the instructions, when run by the processor, cause the user equipment to perform the method described above.

The method performed by user equipment and the corresponding user equipment according to the present disclosure can effectively activate an SCG so as to resume data transmission.

### BRIEF DESCRIPTION OF THE DRAWINGS

FIG. 1 is a flowchart showing a method performed by user equipment according to an embodiment of the present invention.
FIG. 2 is a schematic structural block diagram of user equipment according to the present invention.

### DETAILED DESCRIPTION

The following describes the present invention in detail with reference to the accompanying drawings and specific embodiments. It should be noted that the present invention should not be limited to the specific embodiments described below. In addition, detailed descriptions of well-known technologies not directly related to the present invention are omitted for the sake of brevity, in order to avoid obscuring the understanding of the present invention.

Prior to the specific description, several terms mentioned in the present invention are illustrated as follows. The terms involved in the present invention shall have the meanings set forth below, unless otherwise indicated.
UE: User Equipment
NR: New Radio
eLTE: enhanced Long Term Evolution
E-UTRAN: Evolved Universal Terrestrial Radio Access Network
DC: Dual Connectivity
MC: Multi Connectivity
Gnb: a base station node which provides UE with NR user plane and control plane protocol stacks and is connected to a 5G core network
Enb: a base station node which provides UE with E-UTRAN user plane and control plane protocol stacks and is connected to an EPC core network
Ng-enb: a base station node which provides UE with E-UTRAN user plane and control plane protocol stacks and is connected to a 5G core network
SRB: signaling radio bear
DRB: data radio bear
Split SRB: split signaling radio bearer
RLC: Radio Link Control layer
PDCP: Packet Data Convergence Protocol layer
MAC: Media Access Control layer
MAC CE: MAC Control Element
SRS: Sounding Reference Signal
CSI: Channel State Information
PDCCH: Physical Downlink Control Channel
PUCCH: Physical Uplink Control Channel
RRC: Radio Resource Control layer
DCI: Downlink Control Information

Dual connectivity or multi-connectivity means that UE operating in a connected state establishes a physically established wireless connection with more than one network node, and implements data transmission. A master node (MN) and a secondary node (SN) are included.

The MN is executed by one base station, which may be a Gnb that supports 5G technology or an Enb that supports 4G technology, and may also be an ng-eNB that supports connection to a next generation core network (5G core network). A serving cell group controlled by the MN is referred to as a master cell group (MCG). At least one primary serving cell is present, and is referred to as a primary cell (PCell). UE performs radio link monitoring (RLM) on the PCell. If the MCG further includes other cells, then the other cells may be referred to collectively as a secondary serving cell (SCell). An SRB established between the MN and the UE is commonly referred to as SRB 1, and is mainly used to transmit an RRC message between the MN and the UE.

The SN is executed by one base station, which may be a Gnb that supports 5G technology or an Enb that supports 4G technology, and may also be an ng-eNB that supports connection to a next generation core network (5G core network). A serving cell group controlled by the SN is referred to as a secondary cell group (SCG). The SCG at least includes a primary serving cell referred to as a PSCell (Primary SCG Cell). The UE performs radio link monitoring on the PSCell. If the SCG further includes other cells, then the other cells may be referred to collectively as a secondary serving cell (SCell). An SRB may be established between the SN and the UE, and is commonly referred to as SRB3, and is mainly used to transmit an RRC message between the SN and the UE, e.g., an SCG-associated measurement report.

Specific embodiments of the present invention are described in detail below. In addition, as described above, the embodiments of the present invention are exemplary descriptions for facilitating understanding of the present invention, and are not intended to limit the present invention.

### [Embodiment 1]

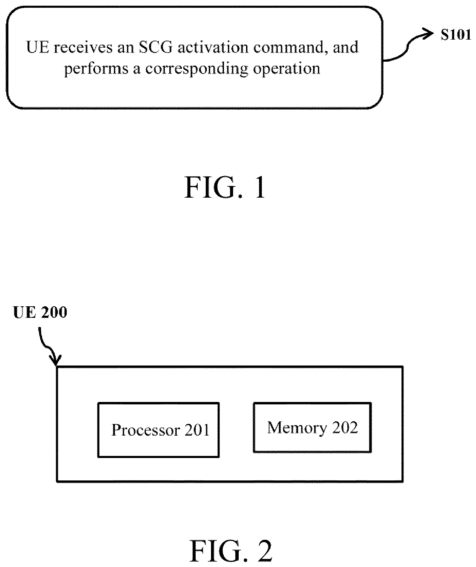

Provided in this embodiment is a method in which UE configured with dual connectivity or multi-connectivity reactivates a deactivated SCG during communication with an MCG and the SCG. As shown in FIG. 1, the method includes:
Step S101: receiving, by the UE, an SCG activation command, and when the UE receives the SCG activation command, performing, by the UE, at least one or more of the following operations:
- resuming transmission of an SRB and a DRB on the SCG, wherein, preferably, transmission of all SRBs and all DRBs on the SCG may be resumed;
- initiating a random access procedure on a PSCell of the SCG, or initiating random access on the PSCell;
- if a timer T310 is running, stopping the timer T310, wherein T310 is started when the UE consecutively receives N out-of-sync indications on the PSCell;
- if a timer T312 is running, stopping the timer T312, wherein T312 is configured with a timer measurement identity (ID), and is started when a measurement report thereof is triggered;
- resuming or initiating a measurement associated with the SCG or a measurement configuration (*measConfig associated with SCG*) associated with the SCG, wherein the measurement herein refers to a measurement operation performed according to a measurement configuration, and such measurement configuration may be contained in an *RRCReconfiguration* message received by the UE from SRB3, or contained in an *RRCReconfiguration* message included in an *RRCReconfiguration* message received by the UE from SRB1;
- releasing a measurement configuration associated with the SCG in a deactivated state;
- activating an SCell of the SCG, wherein, preferably, all SCells of the SCG may be activated; or, the SCG activation command indicates states of SCells belonging to the SCG, and a portion of the SCells set to an activated state are activated;
- activating the PSCell of the SCG;
- starting an SCG activation timer, wherein a duration of the timer is pre-configured by a network side/base station, and when the timer expires or is stopped, it can be considered that the SCG enters the deactivated state, or it can be considered that the SCG is deactivated; and
- if an SCG deactivation timer is running, stopping the deactivation timer, wherein the deactivation timer is started when the SCG enters the deactivated state or when a deactivation command is received.

### [Embodiment 2]

The "activating an SCell of the SCG" and the "activating the PSCell of the SCG" mentioned in Embodiment 1 may both be referred to as activating a serving cell. Activating a serving cell includes at least the following operation:
- activating any active bandwidth part (BWP) associated with the serving cell.

When a serving cell is activated, the following features are present:
- an SRS may be transmitted on the serving cell;
- CSI may be reported for the serving cell;
- if the serving cell is configured with an uplink channel, then transmission may be performed on the uplink channel (UL-SCH) of the serving cell;
- if the serving cell is configured with a random access channel, then transmission may be performed on the random access channel (RACH) of the serving cell;
- PDCCH monitoring is performed on the serving cell;
- a PDCCH for the serving cell is monitored; and
- if the serving cell is configured with a PUCCH, then perform the PUCCH transmission on the serving cell.

It may be considered that a serving cell having the above features may be referred to as an activated cell or a cell in an activated state.

Embodiment 2 may be implemented on the basis that the operation of activating the SCell or activating the PSCell in Embodiment 1 has been performed.

### [Embodiment 3]

Another implementation method of "activating the PSCell of the SCG" mentioned in Embodiment 1 may be to perform BWP switching for the PSCell, that is, to switch from a currently dormant BWP to an operating or active BWP.

For example, on the PSCell, prior to reception of the SCG activation command, a BWP on which the UE operates is a dormant BWP, and a BWP ID thereof is BWP-1. When the SCG activation command is received, switching from the BWP of the PSCell on which the UE operates to a BWP having a BWP ID of BWP-2 is performed. This BWP-2 is an active BWP or a non-dormant BWP.

The dormant BWP means that the BWP configuration does not contain PDCCH configurations, or does not contain valid PDCCH configurations; that is, the PDCCH configurations are absent. These PDCCH configurations are used to perform PDCCH monitoring, so that when a dormant BWP does not contain any PDCCH configurations, the UE does not need to monitor a corresponding PDCCH on the dormant BWP. Correspondingly, the active BWP means that the BWP configuration contains PDCCH configurations or valid PDCCH configurations for PDCCH monitoring.

Preferably, this BWP-2 is a pre-configured default BWP. When the UE receives the SCG activation command, the UE always switches from the dormant BWP to the default BWP on the PSCell of the SCG.

Embodiment 3 may be implemented on the basis that the operation of activating the PSCell in Embodiment 1 has been performed.

### [Embodiment 4]

The SCG activation command mentioned in Embodiments 1-3 may be implemented in the following three modes:

### Mode 1

The SCG activation command is an RRC reconfiguration message carrying information indicating activation of the SCG. For example, the reconfiguration message carries an information element indicating SCG activation information. For example, an SCG state information element is set, and when the value of the information element is true or 1, the UE is instructed to activate the SCG corresponding to the information element.

A combined means may also be employed. For example, an SCG state information element is set in the RRC reconfiguration message. When the value of the SCG state information element in the RRC reconfiguration message is true or 1, and when the same RRC reconfiguration message further carries another information element, e.g., an IE for performing reconfiguration with sync, the presence of both of the two information elements indicates that the UE is instructed to activate the corresponding SCG.

When the UE receives the RRC reconfiguration message having the above features, the activation operations described above in Embodiments 1-3 are performed.

### Mode 2

The SCG activation command may also be a MAC CE carrying information indicating activation of the SCG, e.g., an SCG activation MAC CE. When the UE receives the MAC CE, the UE indicates to an upper layer, e.g., the RRC layer, that the SCG is to be activated, or that the PSCell belonging to the SCG is to be activated. The RRC layer performs, on the basis of the indication, the activation operations described above in Embodiments 1-3. Optionally, the MAC CE carries information of the PSCell or the SCell belonging to the SCG.

For example, a bitmap is set in the MAC CE, and each bit corresponds to a PSCell or an SCell. When the value corresponding to a bit corresponding to the PSCell is 1, then it is indicated that the PSCell is activated or the SCG is activated. When the value corresponding to a bit corresponding to the SCell is 1, then it is indicated that the SCell is activated.

In particular, the PSCell may be re-designated in the MAC CE. For example, in the deactivated state, a cell sequence number/cell ID of the PSCell is X, and then a cell with a cell sequence number/cell ID of Y may be designated as the PSCell in the MAC CE, so that when the operation of activating the SCG is performed, the PSCell is no longer the previous cell X, but the cell Y instead.

Such an SCG activation MAC CE may be used to explicitly or implicitly activate the SCG.

### Explicit Activation

An SCG activation MAC CE may be designed to carry an indication indicating that the UE is to activate a currently configured SCG. In particular, if multiple SCGs are configured, then the MAC CE further needs to carry a sequence number of the SCG.

When the UE receives the SCG activation MAC CE, information indicating that the SCG is to be activated needs to be indicated to an upper layer. The upper layer herein mainly refers to the RRC layer.

The RRC layer performs, on the basis of the indication, any above operation in Embodiments 1-3 with respect to the activated SCG.

### Implicit Activation

A serving cell activation MAC CE may be designed. When activation of the PSCell of the SCG is indicated in the MAC CE, the UE may consider that the SCG activation command has been received. The activation of the SCG is implicitly indicated herein by activation of the PSCell of the SCG.

When the UE receives the serving cell activation MAC CE, and when activation of the PSCell of the SCG is indicated in the MAC CE, information indicating that the SCG is activated or information indicating that the PSCell of the SCG is activated needs to be indicated to an upper layer. The upper layer herein mainly refers to the RRC layer.

The RRC layer performs, on the basis of the indication, any above operation in Embodiments 1-3 with respect to the activated SCG.

### Mode 3

The SCG activation command may also be carried in downlink control information (DCI) carrying information indicating activation of the SCG. For example, the DCI carries a field, e.g., an SCG state field. When the field is present, or when the value of the field is set to a particular value, e.g., 1, activation of the SCG is indicated.

Similarly, such DCI may be used to explicitly or implicitly activate the SCG.

A DCI format may be designed to carry a field, and the field or a value of the field indicates activation of the PSCell of the SCG.

When the UE receives a PDCCH carrying the DCI format, the UE may activate the PSCell and consider that the SCG activation command has been received. The reception of the PDCCH is processed on a physical layer, so that when the PDCCH is received, information indicating that the SCG is activated or information indicating that the PSCell of the SCG is activated needs to be indicated to an upper layer.

The upper layer performs, on the basis of the indication, any above operation in Embodiments 1-3 with respect to the activated SCG.

### [Embodiment 5]

On the basis of Embodiment 4, when the UE receives the SCG activation command, confirmation information or response information needs to be transmitted to the network side/base station to indicate that the SCG activation command has been received.

Corresponding to the three implementation modes in Embodiment 4, the response information may also be implemented in three modes:

### Mode 1

After the UE receives the RRC reconfiguration message carrying the SCG activation command or indicating SCG activation, the UE generates an RRC reconfiguration complete message, and submits the same to a lower layer to transmit the same. This message is transmitted to the base station as a response message for the activation command, indicating that the SCG activation command has been received.

### Mode 2

When the UE receives the SCG activation MAC CE carrying the SCG activation command or indicating SCG activation, an SCG activation confirmation is triggered, and in the presence of the triggered SCG activation confirmation, when the UE acquires an available uplink resource for new transmission, a multiplexing and assembly procedure is instructed to generate an SCG activation confirmation MAC CE for transmission. After the SCG activation confirmation MAC CE is generated, the activated SCG activation confirmation may be cancelled.

### Mode 3

When the UE receives the DCI carrying the SCG activation command or indicating SCG activation, information representing an acknowledgment, e.g., a positive acknowledge or ACK, is transmitted on a pre-configured PUCCH resource.

### [Embodiment 6]

It is mentioned in Embodiment 5 that when the UE receives the SCG activation command, the confirmation information or the response information needs to be transmitted to the network side/base station. A transmission occasion of the response message may be the time when the SCG activation command is received, or the time when the UE successfully activates the SCG.

For example, when the UE receives the SCG activation command, a random access procedure on the PSCell may be initiated. When the random access procedure is successfully completed, it may be considered that the SCG is successfully activated. Then, the UE may transmit the above response message after the random access is successfully completed.

### [Embodiment 7]

It is mentioned in Embodiments 1-6 that transmission on the SCG may be resumed when the UE receives the SCG activation command. This resume operation may be performed when (after) the UE receives the SCG activation command, or may be performed when (after) the UE successfully activates the SCG.

For example, when the UE receives the SCG activation command, a random access procedure on the PSCell may be initiated. When the random access procedure is successfully completed, it may be considered that the SCG is successfully activated. Then, the UE may resume transmission on the SCG.

### [Embodiment 8]

When the SCG activation is not successful, the UE may initiate an SCG FAILURE REPORT procedure, and transmit an SCG failure information message to the network side in this procedure. This message may carry a failure cause value indicating an SCG activation failure.

The following methods may be used to determine whether the SCG activation has succeeded or failed:
Method 1: as described above, when the UE receives the SCG activation command, the random access procedure on the PSCell may be initiated. When the random access procedure is successfully completed, it may be considered that the SCG is successfully activated. If the random access procedure is not successfully completed, it may be considered that the SCG activation has failed. For example, when the UE receives an RA problem, and if the RA is triggered by activation of the SCG/PSCell, then it may be determined that the SCG activation has failed.
Method 2: when the UE receives the SCG activation command, the UE may start an SCG activation timer. When the timer expires, it may be considered that the SCG activation has failed. When the SCG activation succeeds, e.g., when the random access procedure is successfully completed, the timer may be stopped. In this case, the SCG failure information message may indicate that the failure cause value relates to expiration of the timer. Since the timer is started when the SCG activation is performed, the network side may determine that the SCG activation has failed.

FIG. 2 is a schematic structural block diagram of user equipment according to the present invention. As shown in FIG. 2, user equipment (UE) 200 includes a processor 201 and a memory 202. The processor 201 may include, for example, a microprocessor, a microcontroller, an embedded processor, and the like. The memory 202 may include, for example, a volatile memory (such as a random access memory (RAM)), a hard disk drive (HDD), a non-volatile memory (such as a flash memory), or other memories. The memory 202 stores program instructions. The instructions, when run by the processor 201, can perform the above method performed by user equipment as described in detail in the present invention.

The program running on the device according to the present invention may be a program that enables the computer to implement the functions of the embodiments of the present invention by controlling a central processing unit (CPU). The program or information processed by the program may be temporarily stored in a volatile memory (for example, a random access memory (RAM)), a hard disk drive (HDD), a non-volatile memory (for example, a flash memory), or other memory systems.

The program for implementing the functions of the embodiments of the present invention may be recorded on a computer-readable recording medium. The corresponding functions may be achieved by reading programs recorded on the recording medium and executing them by the computer system. The phrase "computer system" herein may be a computer system embedded in the device, which may include operating systems or hardware (e.g., peripherals). The phrase "computer-readable recording medium" may refer to a semiconductor recording medium, an optical recording medium, a magnetic recording medium, a recording medium for programs that are dynamically stored for a short time, or any other recording medium readable by a computer.

Various features or functional modules of the device used in the above embodiments may be implemented or executed by circuits (for example, monolithic or multi-chip integrated circuits). The circuits designed to execute the functions described in the present specification may include a general-purpose processor, a digital signal processor (DSP), an application specific integrated circuit (ASIC), a field programmable gate array (FPGA) or other programmable logic devices, discrete gates or transistor logic, discrete hardware components, or any combination of the above. The general-purpose processor may be a microprocessor, or may be any existing processor, controller, microcontroller, or state machine. The circuit may be a digital circuit or an analog circuit. When new integrated circuit technologies that replace existing integrated circuits emerge because of the advances in semiconductor technology, one or a plurality of embodiments of the present invention may also be implemented using these new integrated circuit technologies.

Furthermore, the present invention is not limited to the embodiments described above. Although various examples of the embodiments have been described, the present invention is not limited thereto. Fixed or non-mobile electronic devices installed indoors or outdoors, such as AV equipment, kitchen equipment, cleaning equipment, air conditioners, office equipment, vending machines, and other household appliances, may be used as terminal devices or communications devices.

The embodiments of the present invention have been described in detail above with reference to the accompanying drawings. However, the specific structures are not limited to the above embodiments. The present invention also includes any design modifications that do not depart from the main idea of the present invention. In addition, various modifications can be made to the present invention within the scope of the claims. Embodiments resulting from appropriate combination of the technical means disclosed in the different embodiments are also included within the technical scope of the present invention. In addition, components with the same effect described in the above embodiments may be replaced with one another.

## Claims

1. A method performed by user equipment, in which user equipment (UE) configured with dual connectivity or multi-connectivity reactivates a deactivated secondary cell group (SCG) during communication with a master cell group (MCG) and the SCG, the method comprising the following steps:
receiving, by the UE, an SCG activation command, and when the UE receives the SCG activation command, performing at least one of the following operations:
resuming transmission of a signaling radio bearer (SRB) and a data radio bearer (DRB) on the SCG;
initiating a random access procedure on a primary serving cell (PSCell) of the SCG, or initiating random access on the PSCell;
if a timer T310 is running, stopping the timer T310, wherein T310 is started when the UE consecutively receives N out-of-sync indications on the PSCell;
if a timer T312 is running, stopping the timer T312, wherein T312 is configured with a timer measurement ID, and is started when a measurement report thereof is triggered;
resuming or initiating a measurement or a measurement configuration associated with the SCG;
releasing a measurement configuration associated with the SCG in a deactivated state;
activating a secondary serving cell (SCell) of the SCG;
activating the PSCell of the SCG;
starting an SCG activation timer; and
if an SCG deactivation timer is running, stopping the deactivation timer, wherein the deactivation timer is started when the SCG enters the deactivated state or when a deactivation command is received.

2. The method performed by user equipment according to claim 1, wherein
a serving cell activation operation comprising the activating the SCell of the SCG and the activating the PSCell of the SCG comprises at least the following operation:
activating any active bandwidth part (BWP) associated with the serving cell.

3. The method performed by user equipment according to claim 2, wherein
when a serving cell is activated,
a sounding reference signal (SRS) is transmitted on the serving cell;
channel state information (CSI) is reported for the serving cell;
if the serving cell is configured with an uplink channel, then transmission is performed on the uplink channel of the serving cell;
if the serving cell is configured with a random access channel, then transmission is performed on the random access channel of the serving cell;
physical downlink control channel (PDCCH) monitoring is performed on the serving cell;
a PDCCH for the serving cell is monitored; or
if the serving cell is configured with a physical uplink control channel (PUCCH), then transmission is performed on the PUCCH of the serving cell.

4. The method performed by user equipment according to claim 1, wherein
the activating the PSCell of the SCG refers to performing BWP switching for the PSCell, that is, to switch from a currently dormant BWP to an operating or active BWP.

5. The method performed by user equipment according to any one of claims 1 to 4, wherein
the SCG activation command is a radio resource control layer (RRC) reconfiguration message carrying information indicating activation of the SCG;
the SCG activation command is a media access control layer control element (MAC CE) carrying information indicating activation of the SCG; or
the SCG activation command is carried in downlink control information (DCI) carrying information indicating activation of the SCG.

6. The method performed by user equipment according to claim 5, wherein
the RRC reconfiguration message carries an information element indicating SCG activation information;
the MAC CE is an SCG activation MAC CE carrying an indication indicating that the UE is to activate a currently configured SCG;
the MAC CE is a serving cell activation MAC CE, and when activation of the PSCell of the SCG is indicated in the MAC CE, the UE considers that the SCG activation command has been received;
the DCI is in a DCI format carrying a field, and the field or a value of the field indicates activation of the PSCell of the SCG; or
when the UE receives a PDCCH carrying the DCI format, the UE activates the PSCell and considers that the SCG activation command has been received.

7. The method performed by user equipment according to claim 6, wherein
when the UE receives the SCG activation command, the UE transmits confirmation information or response information to a network side/base station to indicate that the SCG activation command has been received, comprising:
after the UE receives the RRC reconfiguration message carrying the SCG activation command or indicating SCG activation, generating, by the UE, an RRC reconfiguration complete message, and submitting the same to a lower layer to transmit the same;
when the UE receives the SCG activation MAC CE carrying the SCG activation command or indicating SCG activation, triggering an SCG activation confirmation, and in the presence of the triggered SCG activation confirmation, when the UE acquires an available uplink resource for new transmission, instructing a multiplexing and assembly procedure to generate an SCG activation confirmation MAC CE for transmission; or
when the UE receives the DCI carrying the SCG activation command or indicating SCG activation, transmitting, on a pre-configured PUCCH resource, information representing an acknowledgment.

8. The method performed by user equipment according to claim 7, wherein
when the UE receives the SCG activation command, a transmission occasion for transmitting the confirmation information or the response information to the network side/base station is:
when the SCG activation command is received; or
when the UE successfully activates the SCG.

9. The method performed by user equipment according to any one of claims 1 to 4, wherein
when the UE receives the SCG activation command, a resume occasion for resuming transmission on the SCG is:
when or after the UE receives the SCG activation command; or
when or after the UE successfully activates the SCG.

10. User equipment, comprising:
a processor; and
a memory storing instructions,
wherein the instructions, when run by the processor, cause the user equipment to perform the method according to any one of claims 1 to 9.
